# EUROPEAN PATENT SPECIFICATION

(11) **EP 3 051 269 B1**
(45) Date of publication and mention of the grant of the patent: **24.07.2019**
(21) Application number: 16151815.4
(22) Date of filing: 19.01.2016
(51) Int. Cl.: G01M 99/00, B66C 1/40, G01G 13/14, G01L 5/10

(54) **OVERPRESSURE PROTECTION TEST**
ÜBERDRUCKSCHUTZPRÜFUNG
TEST DE PROTECTION CONTRE LES SURPRESSIONS

(30) Priority: 27.01.2015 NL 2014194
(43) Date of publication of application: 03.08.2016
(73) Proprietor: Energie Consult Holland B.V., 6716 BT Ede (NL)
(72) Inventor: DE VISSER, Pieter André, 3904 TD Veenendaal (NL)
(74) Representative: Klavers, Cornelis

(56) References cited:
- JP-A- 2008 102 034
- JP-A- 2013 015 483

## Description

The present invention relates to a method and holder according to the preambles of claims 1 and 9 respectively.

Measurements are conducted on practical safety parameters of overpressure safeguards, such as inter alia the opening pressure. Such safeguards, which may be the size of a manhole, are used on roofs of above-ground holders or storage tanks which may be filled with a liquid or gaseous medium, such as a fuel, a chemical substance or a gas, such as for example nitrogen.

Overpressure safeguards must be periodically inspected, serviced and approved by authorized and certified companies to ensure that, if necessary, at a level of several millibar or several tens of millibar or several hundred millibar, the safeguard opens into the open air so as to preclude bursting of the holder due to an impermissibly high overpressure. In order to test and conduct measurements on the safeguards, also referred to as ERVs (Emergency Relief Valve), the flange or feedthrough of the storage tank roof must be removed together with the generally hinged cover and the weights provided thereon, which are then hoisted down and transported to a workshop for maintenance and inspection. At the workshop the necessary maintenance is usually performed on the seating on the feedthrough on which the cover in the closed state rests, and, if necessary, the packing present thereon is replaced by a new one. Subsequently, a measurement is performed to determine how heavy the weights must be to ensure proper operation of the safeguard. After that, the overpressure safeguard is transported back, hoisted onto the roof of the storage tank, screwed down on said roof and re-assembled further.

JP 2008 102034 A discloses a method and device for measuring an opening force of a lid on a manhole with reduced measurement errors. This is performed by means of a release mechanism which has a load meter for measuring said force and which is connected to a rotatable bar by means of a rope which bar in turn is connected to the cover of the manhole. Said errors in the tensile force in the rope measured by the load meter are reduced by maintaining the rope and the bar at right angles relative to one another during leverage of the bar.

JP 2013 015483 A which has been used to delimit respective claims 1 and 9 there from discloses such a method and device. The device comprises a load cell connected via a rope to a specimen lid via a spring, and measures a variation per hour of opening force of the lid of a container. A power source is used to open the lid and by means of an acceleration sensor the acceleration of the lid after the movement from its base is measured. The document learns that the lid is an seal adhered to the container packing which seal requires to be pealed off easily without liquid splashing out of the container due to i.e. shocks during pealing.

It is an object of the present invention to provide an improved method of conducting reliable measurements on overpressure safeguards, which can be carried out in a simple, safe and advantageous manner, and the reliability of which is such that the overpressure safeguard opens sufficiently rapidly and to a sufficient extent in case the prescribed pressure is exceeded.

To achieve this, the method and holder according to the invention are characterized by the features of claims 1 and 9, respectively.

The method according to the invention is based on a tensile force measurement which, if necessary, can be carried out, in situ, on the roof of the storage tank, wherein removal, disassembly, transport and, after the measurement, return transport and renewed installation of the safeguard on the tank can be advantageously dispensed with since the overpressure safeguard remains intact. Therefore, it is not necessary to hoist and mount a temporary replacement safeguard, thereby reducing the risk of undesirable emissions from the tank. The measurement and the reliability of the determination of the parameters which are important for the overpressure safeguard are improved, which can be attributed to the fact that the transport back to the holder and the installation of the safeguard, apart from the absence of any accidental damage, cannot be the cause of sources of error. In addition, the total number of handling actions have been reduced and the same applies to the use of personnel and equipment, as a result of which the respective costs are reduced without the degree of protection or reliability being adversely affected.

In addition, it has been established that on the basis of coupling the hoisting rope at various locations to the cover provided with weights, an accurate image is obtained not only of the opening pressure of the safeguard but also of the maximum blow-off capacity thereof. The latter parameter, which can also be measured in a simple manner, has been found to be more important for the proper functioning of an overpressure safeguard than was assumed hitherto.

Preferably, the hoisting frame comprises a tripod which is arranged around the locations where the rope is certain to engage the cover. It is further preferred that the tripod is arranged in situ on the roof of the holder, so that it is stably supported on said roof.

The force measurement device is a certified, calibrated, electrical or magnetic force measurement device, which preferably comprises one or more strain gauges which, in spite of being inexpensive, provide accurate measuring results.

Further detailed, possible embodiments explained in the other claims are mentioned, together with the associated advantages, in the following description.

Next, the method of conducting measurements on an overpressure safeguard, the use of a hoisting frame in said method and the holder on which the overpressure safeguard to be measured is provided will all be elucidated according to the present invention by means of the figures given below, in which corresponding parts are provided with the same reference numerals.
In the figures:
Figure 1 shows a holder according to the invention, on the roof of which an overpressure safeguard is provided which is to be subjected to the method according to the invention;
Figure 2 shows a hoisting arrangement located close to an individual overpressure safeguard or close to an overpressure safeguard provided on the holder shown in figure 1, which hoisting arrangement is used to carry out the method according to the invention; and
Figure 3 shows the opening pressure exerted on the cover, which is proportional to the measured opening force, expressed as a function of time

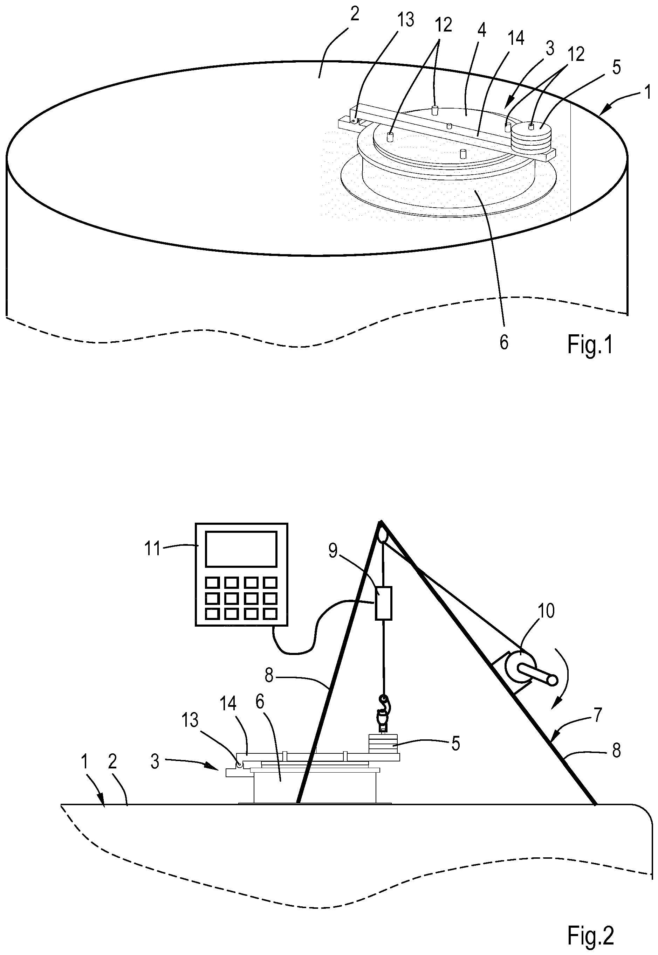

Figure 1 shows a storage tank or holder 1 which can suitably be filled with a liquid medium. In order to prevent that the holder 1 is subjected to too high a pressure as a result of gasses released from the medium, the roof 2 of the holder is provided with a mechanical overpressure safeguard 3 which opens automatically when a specific overpressure level is reached. The pressure at which the overpressure safeguard 3 opens is, apart from the diameter of the overpressure safeguard, determined by the self-weight of a usually hinged cover 4 of the overpressure safeguard 3 and by weights 5 to be secured to or on this lid or cover. Instead of or in addition to weights, permanent magnets or, if necessary, electromagnets whose magnetic force is adjustable can be used. The total closing force exerted by the cover 4, and hence the sealing force, determines to a substantial degree the proper functioning of the overpressure safeguard 3. This is because the cover 4 provided with weights 5, through a combination of a (valve) seat and a packing (not shown), seals with a specific sealing force off on a feedthrough 6 of the overpressure safeguard 3 secured to the roof 2. It is possible that by the stored mediums or gasses being released, by temperature and weather influences, the packing is adversely affected, or the seat and/or cover become warped, as a result of which the pressure between valve seat and packing, viewed around the circumference of the cover, is not always the same. It has been found that identical overpressure safeguards may have a similar opening pressure, but that the weights used differed by 8 kg. This results in unequal pressures at maximum blow-off capacity, which has been found to be a more important safety parameter than hitherto assumed. The maximum blow-off capacity is determined when the cover of the safeguard is slightly open, for example more than 50 mm or several degrees, such as 10 degrees. The opening pressure as well as the usually larger pressure at maximum blow-off capacity can be determined by means of the tensile force measurement to be explained hereinafter.

A hoisting frame 7, shown in figure 2, is arranged close to the overpressure safeguard 3, said hoisting frame preferably being a tripod for stability reasons, the legs of which will in practice be adjustable for length. The hoisting frame 7 is provided with a substantially vertically extending hoisting rope 8, which is connected at successive locations to the cover 4 provided with weights. The figure shows that an end portion of the hoisting rope 8 is coupled, in this case, to the centre of gravity of a stack of weights 5 via a force measurement device 9 connected to the hoisting rope, which measures the tensile force in the hoisting rope 8. At the other end of the rope 8 there is a winch 10 which, in this case, is manually operable, by means of which the closing force of the cover 4 can be compensated. The force measurement device 9 in practice comprises one or more strain gauges, by means of which, as is well known, on the basis of a change of resistance in the case of a change in length, the tensile force in a wire or rope connected thereto can be determined. Other types of force measurement device 9, such as magnetic or electro-mechanical devices are also possible.

To determine the opening pressure, a number of tensile force measurements, for example four, are carried out at different locations 12 on the periphery of the cover 4 by means of the force measurement device 9 comprised in the hoisting rope 8. In this case, a 0.1 mm thick metal foil is present between the cover 4 and the feedthrough 6. The measuring result with the lowest measured tensile force, which is proportional to the lowest pressure, when the cover 4 starts to open, is used in a computer model to calculate the minimum opening pressure at which leakage of the valve starts.

Likewise, if the cover 4 is open, for example, 10 degrees, the force measurement device 9, which now contains a measure of the pressure at maximum blow-off capacity, measures the tensile force in the hoisting rope 8. The tensile force, an electrical measure of which is supplied by the force measurement device 9 each time to a computer 11 connected therewith, is used in a validated computer model to calculate the actual pressure at maximum blow-off capacity for the overpressure safeguard 3 being used.

In principle, the cover 4 carrying the weights could rest loose on the feedthrough. In practice, however, it is a hinged cover, and as shown, the cover 4 has at least one hinge point 13 situated outside or next to the feedthrough. In said situation, opposite the at least one hinge point 13, an arm 14 extends beyond the cover on which the weights 5 rest or from which they are suspended.

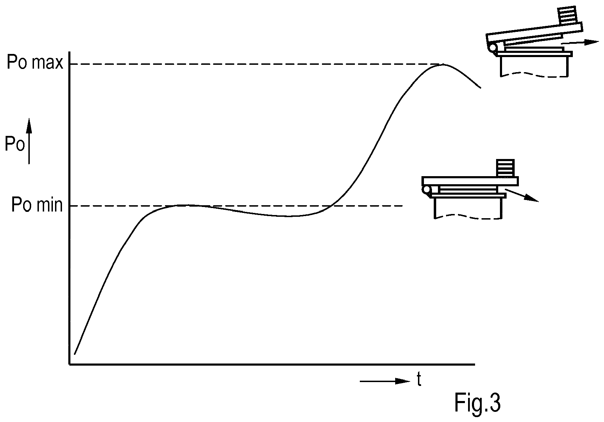

Figure 3 schematically shows a graph of the measured opening force exerted on the cover, which is plotted as the opening pressure proportional therewith as a function of time. When the tensile force in the hoisting rope 8 increases, there is first a moment at pressure P_{o min} at which the cover 4 just becomes (locally) detached from its seat; this is the minimum opening pressure. Shortly afterwards, at pressure P_{o max}, the moment arrives when the cover becomes completely loose from the seating; this is the maximum opening pressure, which is related to pressure at maximum blow-off capacity of the overpressure safeguard.

## Claims

1. A method, wherein:
- a tensile test is conducted on an overpressure safeguard (3) which is formed by a seating and a sealing cover (4) thereon on which a closing force is exerted, for example by means of weights or magnets,
- a hoisting frame (7) provided with a hoisting rope (8) which is coupled to the cover (4) at a specific location is placed near the overpressure safeguard (3), and
- a force measurement device (9) incorporated in the hoisting rope is used to determine the tensile force,
**characterised in that**
the force measurement device (9) measures the tensile force shortly after a point in time where the cover (4) is completely loose of the seating, which measured tensile force(s) comprise(s) a measure of the maximum opening pressure (Pₒ max) which is related to the pressure at maximum blow-off capacity of the overpressure safeguard (3).

2. The method according to claim 1, **characterized in that** said closing force is exerted by means of weights (5) or magnets.

3. The method according to claim 1 or 2, **characterized in that** the cover (4) has at least one hinge point (13).

4. The method according to claim 3, **characterized in that** opposite the at least one hinge point (13), an arm (14) extends beyond the cover (4) on which the above-mentioned closing force is exerted or, as the case may be, on which the weights (5) rest or from which they are suspended.

5. The method according to any one of claims 1 to 4, **characterized in that** the hoisting frame (7) is arranged at specific locations along the circumference of the cover (4) or at the location of the centre of gravity of the weights (5) .

6. The method according to any one of claims 1 to 5, **characterized in that** the hoisting frame (7) has three legs (8) .

7. The method according to any one of claims 1 to 6, **characterized in that** the force measurement device (9) is an electrical or magnetic force measurement device (11).

8. The method according to any one of claims 1 to 7, **characterized in that** the force measurement device comprises one or more strain gauges.

9. A holder (1) for liquid and gaseous mediums in which an overpressure safeguard (3) is provided, and a measuring arrangement arranged close to the overpressure safeguard (3), which holder (1) comprises: - a seating provided on the holder (1) and a sealing cover (4) on which a closing force is exerted, for example by means of weights or magnets, and which measuring arrangement comprises: -a hoisting frame (7) provided with a hoisting rope which is to be stretched and which is coupled to the cover (4) or, as the case may be, the weights (5), in which hoisting rope a force measurement device (9) is incorporated which is equipped to determine the tensile force when the cover (4) becomes detached from the seating, which measured tensile force(s) comprise(s) a measure of the opening pressure (Po min) of the overpressure safeguard (3), **characterised in that** the force measurement device (9) is equipped to determine the tensile force shortly afterwards, at the point in time when the cover is completely loose of the seating, which measured tensile force(s) comprise(s) a measure of the maximum opening pressure (Po max) which is related to the pressure at maximum blow-off capacity of the overpressure safeguard (3).

10. The holder (1) and overpressure safeguard (3) according to claim 9, **characterized in that** the hoisting frame (7) comprises legs (8) which rest on the roof (2) of the holder (1).

11. The holder (1) and overpressure safeguard (3) according to claim 9 or 10, **characterized in that** the hoisting frame (7) has three legs (8).

12. The holder (1) and overpressure safeguard (3) according to claim 10 or 11, **characterized in that** the hoisting frame (7) is provided with adjusting elements incorporated in the legs (8), by means of which the hoisting rope can be adjusted so as to extend at right angles to the plane of the feedthrough (6) on which the cover (4) rests.

13. The holder (1) and overpressure safeguard (3) according to any one of claims 9 to 12, **characterized in that** the force measurement device (9) is an electrical or magnetic force measurement device (11).

## Patentansprüche

1. Verfahren, wobei:
- eine Zugprüfung an einem Überdruckschutz (3) ausgeführt wird, der durch eine Auflagefläche und eine Dichtungsabdeckung (4) darauf gebildet wird, auf die eine Schließkraft ausgeübt wird, zum Beispiel mittels Gewichten oder Magneten,
- ein Hubrahmen (7), der mit einem Hubseil (8) versehen ist, welches mit der Abdeckung (4) an einer speziellen Stelle verbunden ist, ist in der Nähe des Überdruckschutzes (3) platziert, und
- eine Kraftmessvorrichtung (9), die in das Hubseil integriert ist, wird zum Bestimmen der Zugkraft verwendet,
**dadurch gekennzeichnet, dass**
die Kraftmessvorrichtung (9) die Zugkraft kurz nach einem Zeitpunkt misst, an dem die Abdeckung (4) vollständig von der Auflagefläche getrennt ist, wobei die gemessene Zugkraft (-kräfte) ein Maß für den maximalen Öffnungsdruck (Pₒ max) umfasst, der sich auf den Druck bei maximaler Abblaskapazität des Überdruckschutzes (3) bezieht.

2. Verfahren nach Anspruch 1, **dadurch gekennzeichnet, dass** die Schließkraft mittels Gewichten (5) oder Magneten ausgeübt wird.

3. Verfahren nach Anspruch 1 oder 2, **dadurch gekennzeichnet, dass** die Abdeckung (4) mindestens einen Gelenkpunkt (13) hat.

4. Verfahren nach Anspruch 3, **dadurch gekennzeichnet, dass** gegenüber dem mindestens einen Gelenkpunkt (13) ein Arm (14) sich über die Abdeckung (4) erstreckt, auf den die oben genannte Schließkraft ausgeübt wird oder, gegebenenfalls, auf dem die Gewichte (5) ruhen oder von dem sie herabhängen.

5. Verfahren nach einem der Ansprüche 1 bis 4, **dadurch gekennzeichnet, dass** der Hubrahmen (7) an speziellen Orten entlang des Umfangs der Abdeckung (4) oder am Ort des Schwerpunktes der Gewichte (5) angeordnet ist.

6. Verfahren nach einem der Ansprüche 1 bis 5, **dadurch gekennzeichnet, dass** der Hubrahmen (7) drei Beine (8) hat.

7. Verfahren nach einem der Ansprüche 1 bis 6,
**dadurch gekennzeichnet, dass** die Kraftmessvorrichtung (9) eine elektrische oder magnetische Kraftmessvorrichtung (11) ist.

8. Verfahren nach einem der Ansprüche 1 bis 7,
**dadurch gekennzeichnet, dass** die Kraftmessvorrichtung ein oder mehrere Dehnungsmessgeräte umfasst.

9. Halter (1) für flüssige und gasförmige Medien, in dem ein Überdruckschutz (3) vorgesehen ist, und eine Messevorrichtung, die in der Nähe des Überdruckschutzes (3) angeordnet ist, wobei der Halter (1) umfasst: - eine Auflagefläche, die auf dem Halter (1) vorgesehen ist, und eine Dichtungsabdeckung (4), auf die eine Schließkraft ausgeübt wird, zum Beispiel mittels Gewichten oder Magneten, und wobei die Messvorrichtung umfasst: - einen Hubrahmen (7), der mit einem Hubseil versehen ist, welches gestreckt werden soll und welches mit der Abdeckung (4) verbunden ist, oder gegebenenfalls mit den Gewichten (5), wobei in das Hubseil eine Kraftmessvorrichtung (9) integriert ist, die zum Bestimmen der Zugkraft ausgerüstet ist, wenn die Abdeckung (4) sich von der Auflagefläche löst, wobei die gemessene Zugkraft (-kräfte) ein Maß für den Öffnungsdruck (Pₒ min) des Überdruckschutzes (3) darstellt, **dadurch gekennzeichnet, dass** die Kraftmessvorrichtung (9) zum Bestimmen der Zugkraft kurz danach ausgerüstet ist, zu einem Zeitpunkt, wenn die Abdeckung sich vollständig von der Auflagefläche löst, wobei die gemessene Zugkraft (-kräfte) ein Maß für den maximalen Öffnungsdruck (Pₒ max) aufweist, der sich auf den Druck bei maximaler Abblaskapazität des Überdruckschutzes (3) bezieht.

10. Halter (1) und Überdruckschutz (3) nach Anspruch 9,
**dadurch gekennzeichnet, dass** der Hubrahmen (7) Beine (8) aufweist, die auf dem Dach (2) des Halters (1) ruhen.

11. Halter (1) und Überdruckschutz (3) nach Anspruch 9 oder 10, **dadurch gekennzeichnet, dass** der Hubrahmen (7) drei Beine (8) hat.

12. Halter (1) und Überdruckschutz (3) nach Anspruch 10 oder 11, **dadurch gekennzeichnet, dass** der Hubrahmen (7) mit Einstellelementen versehen ist, die in die Beine (8) integriert sind, mittels derer das Hubseil so eingestellt werden kann, dass es sich unter rechten Winkeln zur Ebene der Durchführung (6) erstreckt, auf der die Abdeckung (4) ruht.

13. Halter (1) und Überdruckschutz (3) nach einem der Ansprüche 9 bis 12, **dadurch gekennzeichnet, dass** die Kraftmessvorrichtung (9) eine elektrische oder magnetische Kraftmessvorrichtung (11) ist.

## Revendications

1. Procédé, dans lequel:
- un essai à la traction est effectué sur une sécurité anti-surpression (3) qui est formée d'un siège et d'une couverture d'étanchéité (4) montée sur celle-ci et sur laquelle une force de fermeture est exercée, par exemple au moyen de poids ou d'aimants,
- un cadre de levage (7) équipé d'une corde de levage (8) qui est connectée à la couverture (4) au niveau d'un endroit spécifique et qui est placée à proximité de la sécurité anti-surpression (3), et
- un dispositif de mesure de force (9) incorporé dans la corde de levage est utilisé pour déterminer la force de traction,
**caractérisé en ce que**
le dispositif de mesure de force (9) mesure la force de traction peu de temps après un moment donné où la couverture (4) est complètement détachée du siège, ladite ou lesdites forces de traction mesurées comprennent une mesure de la pression d'ouverture maximale (P₀ max) qui est liée à la pression au niveau de la capacité de purge maximale de la sécurité anti-surpression (3).

2. Procédé selon la revendication 1, **caractérisé en ce que** ladite force de fermeture est exercée au moyen de poids (5) ou d'aimants.

3. Procédé selon la revendication 1 ou la revendication 2, **caractérisé en ce que** la couverture (4) comporte au moins un point d'articulation (13).

4. Procédé selon la revendication 3, **caractérisé en ce qu'**à l'opposé de l'au moins un point d'articulation (13), un bras (14) s'étend au-delà de la couverture (4) sur laquelle la force de fermeture mentionnée ci-dessus est exercée ou, selon le cas, sur laquelle les poids (5) reposent ou à partir desquels ils sont suspendus.

5. Procédé selon l'une quelconque des revendications 1 à 4, **caractérisé en ce que** le cadre de levage (7) est disposé à des endroits le long de la circonférence de la couverture (4) ou au niveau de l'emplacement du centre de gravité des poids (5).

6. Procédé selon l'une quelconque des revendications 1 à 5, **caractérisé en ce que** le cadre de levage (7) comporte trois jambes (8).

7. Procédé selon l'une quelconque des revendications 1 à 6, **caractérisé en ce que** le dispositif de mesure de force (9) est un dispositif de mesure de force électrique ou magnétique (11).

8. Procédé selon l'une quelconque des revendications 1 à 7, **caractérisé en ce que** le dispositif de mesure de force comprend une ou plusieurs jauges de contrainte.

9. Support (1) destiné à des milieux liquide et gazeux dans lequel une sécurité anti-surpression (3) est fournie, et un agencement de mesure disposé à proximité de la sécurité anti-surpression (3), le support (1) comprend : - un siège monté sur le support (1) et une couverture d'étanchéité (4) sur laquelle une force de fermeture est exercée, par exemple au moyen de poids ou d'aimants, et l'agencement de mesure comprend : -un cadre de levage (7) muni d'une corde de levage qui doit être étirée et qui est connectée à la couverture (4) ou, selon le cas, au poids (5), un dispositif de mesure de force (9) est incorporé dans ladite corde de levage qui est équipé afin de déterminer la force de traction lorsque la couverture (4) se détache du siège, ladite ou lesdites forces de traction mesurées comprennent une mesure de la pression d'ouverture (P₀ min) de la sécurité anti-surpression (3), **caractérisé en ce que** le dispositif de mesure de force (9) est équipé afin de déterminer la force de traction peu de temps après, à un moment donné lorsque la couverture est complètement détachée du siège, ladite ou lesdites forces de traction mesurées comprennent une mesure de la pression d'ouverture maximale (P₀ max) qui est liée à la pression au niveau de la capacité de purge maximale de la sécurité anti-surpression (3).

10. Support (1) et sécurité anti-surpression (3) selon la revendication 9, **caractérisés en ce que** le cadre de levage (7) comprend des jambes (8) qui repose sur le toit (2) du support (1).

11. Support (1) et sécurité anti-surpression (3) selon la revendication 9 ou la revendication 10, **caractérisés en ce que** le cadre de levage (7) comporte trois jambes (8) .

12. Support (1) et sécurité anti-surpression (3) selon la revendication 10 ou la revendication 11, **caractérisés en ce que** le cadre de levage (7) est muni d'éléments de réglage incorporés dans les jambes (8), au moyen desquels la corde de levage peut être réglée de manière à s'étendre à des angles droits par rapport au plan de la traversée (6) sur laquelle repose la couverture (4).

13. Support (1) et sécurité anti-surpression (3) selon l'une quelconque des revendications 9 à 12, **caractérisés en ce que** le dispositif de mesure de force (9) est un dispositif de mesure de force électrique ou magnétique (11).
